# EUROPEAN PATENT SPECIFICATION

(11) **EP 2 146 126 B1**
(45) Date of publication and mention of the grant of the patent: **23.01.2013**
(21) Application number: 08160327.6
(22) Date of filing: 14.07.2008
(51) Int. Cl.: B29C 53/58, B29C 53/62, F16L 9/16, B29C 70/32, B29C 70/08, B29C 70/02, F16L 11/08

(54) **Method for manufacturing a helically wound pipe**
Verfahren zur Herstellung von spiralförmig gewundenen Rohren
Procédé de fabrication d'un tuyau enroulé en hélice

(43) Date of publication of application: 20.01.2010
(73) Proprietor: Pipelife Nederland B.V., 1601 MA Enkhuizen (NL)
(72) Inventor: Dalmolen, Lambertus Gerrit Peter, 1019 SE, Amsterdam (NL); Leontaridis, Nikos, 1817 GP, Alkmaar (NL)
(74) Representative: van Westenbrugge, Andries

(56) References cited:
- EP-A- 1 088 645
- DE-U1- 29 606 611
- GB-A- 840 602
- GB-A- 1 588 122
- US-A- 2 783 173
- US-A- 4 104 095
- US-A- 4 459 168
- US-A- 5 362 528
- DATABASE WPI Week 198226 Thomson Scientific, London, GB; AN 1982-53545E XP002510560 & JP 57 082022 A (DAINIPPON INK & CHEM KK) 22 May 1982 (1982-05-22)

## Description

The invention is related to a method for manufacturing a wound plastic pipe by helically winding plastic strips onto a mandrel. Such a method is disclosed in WO-A-2005/053933. According to said prior art method, the plastic strips are obtained by extruding a mixture of plasticized plastic material and reinforcement fibers. The reinforcement fibers in question may have specific lengths, in particular rather short fibers of several millimeters are envisaged. In some instances long fibers are possible as well.

In order to ensure that the fibers contribute to the overall strength of the pipe, a bonding agent is contained in the mixture. Said bonding agent should ensure that load transfer occurs between the fibers and the plastic material through shear forces, in such a way that depending on the orientation of the fibers a strengthening effect is obtained. Although indeed the strength of the pipe may be augmented by adding fibers and a bonding agent to the plastic material, nevertheless the results thereof remain questionable. Inevitably, the bonding strength between the fibers and the plastic material is limited to a certain maximum value. This means that for high pipe loadings the bonding between the fibers and the plastic material will be insufficient. In the case of overloading, the bonding between the fibers and the plastic matrix will yield. As a result, a sharp decrease in the pipe strength will be obtained, almost down to the level of a pipe without fiber reinforcement.

Furthermore, in the process of extruding the mixture of plastic material, fibers and bonding agent, the fibers may become damaged and the orientation thereof may be difficult to control. However, it is important that the fibers have the proper orientation in accordance with the circumferential direction. Only fibers with such circumferential orientation will contribute to the desired reinforcement, in particular the stiffness, in said direction.

The object of the invention is therefore to provide a method as described before for manufacturing a wound pipe and which has a reliable reinforcement. This object is obtained by the features of claim 1.

According to the invention, at least two reinforcement means are wound according to a helix in such a way that a reinforcement is obtained in the circumferential direction. Both the helix of one of the one reinforcement means and the helix of an other reinforcement means are constituted by a multitude of adjoining turns which each have a certain non-zero pitch and which each extend over 360 degrees around the axis of the pipe in question. Preferably, the pitch angle of said turns is relatively small, for instance at most 20 degrees. As a result of the continuous character of the helically wound reinforcement fibers, the adhesion between said fiber and the surrounding plastic material is less important. Even in case no adherence would exist, said reinforcement fibers are able to fulfill their strengthening role. Thus, the required pipe strength and/or stiffness in circumferential direction is always ensured and does not depend on a maximum shear strength between fibers and plastic material.

Preference is given to an embodiment wherein adjoining turns of the reinforcement means are arranged according to a non-overlapping relationship. Such embodiment has the advantage that the layer which is formed by a reinforcement means has a smooth character due to the non-overlapping turns. This contributes to the quality of the pipe. In particular, in such cases the adjoining the turns of the reinforcement means may abut each other.

The reinforcement means comprises furthermore transversely extending auxiliary fibers. These auxiliary fibers provide an adequate reinforcement of the pipe in its longitudinal direction as well. Thus, the pipe is able to provide the required strength and stiffness not only in the circumferential direction, but also in the longitudinal direction.

The core onto which the adjoining turns of the reinforcement means and plastic strip or strips are wound can be carried out in different ways. According to a first possibility, the core can be carried out as a plastic pipe. This plastic pipe then constitutes the inner layer in the final pipe product obtained by this variant of the method according to the invention. However, according to a second embodiment the core may be carried out as a mandrel. In this case, the method according to the invention comprises the step of first of all winding a plastic strip onto the mandrel according to adjoining turns which abut one another. These adjoining turns of the still hot plastic material are fused to each other so as to form a tight inner pipe onto which the further layers of reinforcement means and plastic strip(s) are subsequently and progressively wound.

In an embodiment wherein the reinforcement means bridges adjoining turns of the plastic layer, the coherence of the pipe is furthermore improved. Although these turns of the plastic layer abut each other and may be welded to each other, nevertheless the strength of such a weld connection is limited. As a result of the fact that said weld connections are bridged by the reinforcement means, and in particular by means of the transverse auxiliary fibers thereof, the required strength and/or stiffness can be obtained.

Although fibers which are wound onto the external surface of a wound plastic strip already provide a strengthening effect in the circumferential direction, preferably the method according to the invention also comprises the step of helically winding at least one further plastic strip onto a previous wound strip and onto the reinforcement means. By means of winding a further plastic strip onto the reinforcement means and the previously wound plastic strip, the reinforcement means is contained within the thickness of the pipe wall. This provides a coherent, sturdy structure, within which the reinforcement fibers are well protected.

The reinforcement fiber or reinforcement fibers form part of an elongate reinforcement means.

An efficient manufacturing processes is obtained in case the reinforcement means and at least one plastic strip are wound according to the same pitch. Optimal results are obtained in case the pitch angle between the axis of the pipe and each turn is at least 70 degrees.

In order to ensure a certain required reinforcement of the pipe, the number of reinforcement fibers applied is of importance. In case it is desired to wind multiple main reinforcement fibers, the method according to the invention may comprise the step of helically winding a reinforcement means having a series of main reinforcement fibers. These main reinforcement fibers are generally parallel.

The transverse auxiliary fibers provide the required coherence of the reinforcement means, in such a way that it can be handled in a reliable way during the winding process. Preferably, the continuous reinforcement means has a width which is approximately equal to the width of a strip. More preferably, the reinforcement means may have a web like or net like structure. In the case of such web like or net like reinforcement means, the advantage is obtained that the plastic material of the strips will penetrate into the apertures as defined in the web like or net like structure of the reinforcement means. Thereby, the coherence of the pipe in question and the effect of the reinforcement means is further optimized. In this connection, it is also possible to provide a helically wound plastic strip between two helically wound reinforcement means.

In particular, the method according to the invention can be carried out in such a way that each turn of the reinforcement means bridges adjacent turns of a plastic strip. The pipe thus obtained has an adequate coherence, due to the fact that the adjacent turns of the plastic strip are connected to each other by means of the bridging reinforcement means as mentioned before.

In order to ensure that the strips and the reinforcement means are well bonded together, the method according to the invention may furthermore comprise the steps of:
- heating each plastic strip,
- winding each strip in the heated state thereof.

The turns of each plastic strip will just abut each other whereby seams are formed. The coherence of the pipe is furthermore increased in case the turns of a following plastic strip bridge the seams between the turns of a directly underlying plastic strip.

The invention is furthermore related to a wound plastic pipe, comprising the features of claim 13. Of course, further layers and a further reinforcement means may be wound onto the previous ones so as to obtain the pipe of the desired thickness and of the desired strength in the circumferential direction.

Preferably, the material applied for the plastic strips comprises polyethylene or polypropylene. The material applied for the reinforcement fibers may for instance comprise aramid, polyester, nylon or glass fiber. In order to obtain the desired interlocking between the reinforcement means which comprises fibers and the plastic material, the fabric of the reinforcement means must have an open grid. For instance, it may have a percentage of more than 50% openings.

As mentioned before, the plastic pipe obtained according to the method of the invention has continuous reinforcement fibers which are oriented in the circumferential direction, and transverse fibers which are generally oriented in the longitudinal direction of the pipe. These both sets of fibers provide the pipe in question with the required strength and stiffness both in circumferential as well as in longitudinal direction.

In the plastic pipe according to the invention, the strength and/or stiffness properties of the reinforcement means per unit area in circumferential pipe direction may amounts to about twice the respective strength and/or stiffness properties of the reinforcement means par unit area in longitudinal pipe direction.

The invention will now be described further with respect to the drawings.
Figure 1 shows an overview of the method according to the invention.
Figure 2 shows a cross-section according to II-II of figure 1.
Figure 3 shows the section according to III-III of figure 1.
Figure 4 shows an embodiment of adjoining reinforcement helices.
Figure 5 shows a further embodiment of adjoining reinforcement helices.
Figure 6 shows a further embodiment of adjoining reinforcement helices.

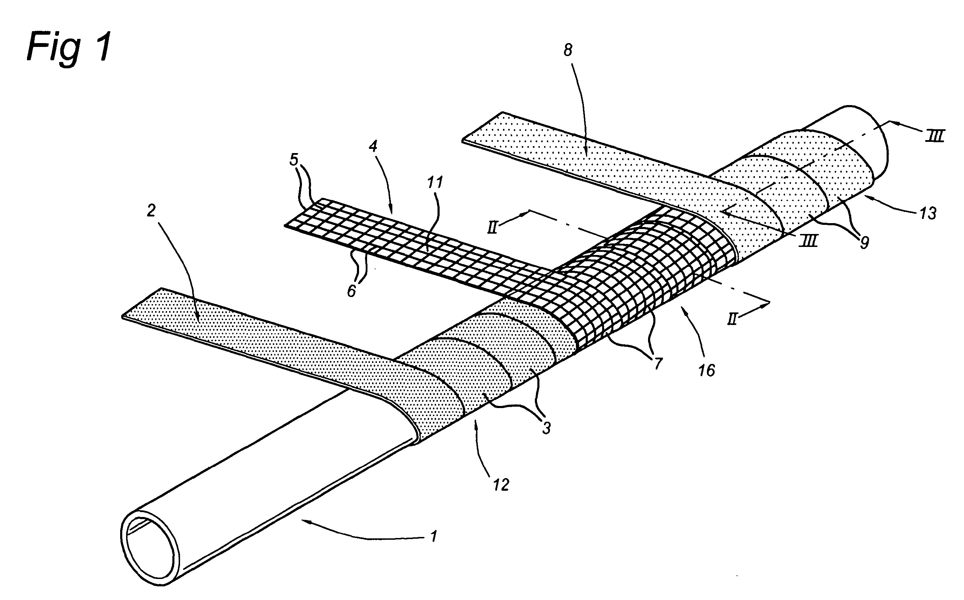

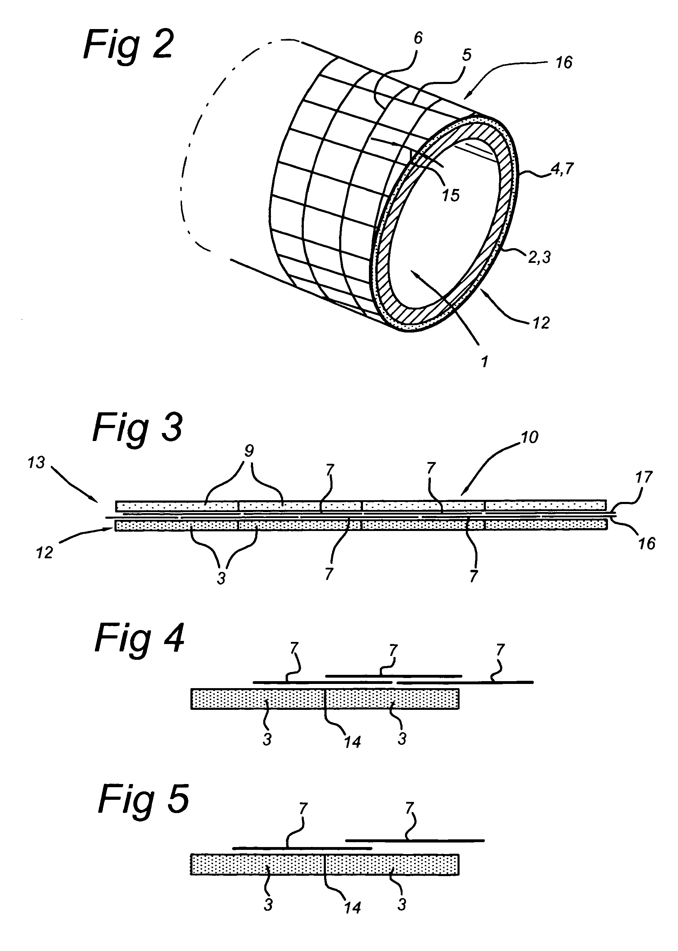

As shown in figure 1, in the method according to the invention use is made of a mandrel 1 the rotational direction of which has been indicated. Onto said mandrel 1, a plastic strip 2 is wound in such a way that the turns 3 thereof abut each other (see the section according to figure 3). The abutting edges of adjoining helices of the plastic layer 12 are fused or welded together as a result of the heated state of the plastic strip 2, whereby a first plastic layer 12 is formed. Subsequently, the reinforcement means 4 are wound onto the wound plastic layer 12, forming a reinforcement layer 16. Said reinforcement means 4 has the form of a net or web which consists of main reinforcement fibers 5 which extend in the longitudinal direction of said net or web, as well as transversely extending auxiliary fibers 6 (see figure 2). Good results are obtained in case the width of the reinforcement net or web is smaller than the diameter of the pipe obtained.

The net 4 is wound onto the wound plastic strip 2 in such a way that the turns 7 of said net 4 abut each other (see the section according to figure 3). The turns 7 of the net 4 of the one reinforcement layer 16 bridge the turns 7 of the net 4 of the other reinforcement layer 17, in such a way that a strong and stiff interconnection between the reinforcement layers 16, 17 is obtained, as is shown on a larger scale in figure 4.

Preferably, the pitch angle 15 (see figure 2) of each turn is relatively small, for instance maximally 20°. Said pitch angle is defined as the angle between the full circle around the pipe axis, and the helically extending edge of the plastic strip of the reinforcement means. Next, a further plastic strip 8 is wound onto the combination consisting of the first plastic layer 12 and the net 4 whereby a second plastic layer 13 is formed. Furthermore, the turns 7 of the reinforcement layer bridge the turns 3,9 of one or both of the plastic layers 12, 13. However, the main function of the plastic layers is to provide the required fluid tightness of the pipe in question, and to provide plastic material which penetrates into the open spaces of the reinforcement nets 4 (see the section of figure 3). In such a way a coherent pipe wall 10 is obtained, in particular as a result of the fact that the heated plastic material of the layers 12, 13 penetrates onto the openings of the net 4.

As shown in figure 3, the main reinforcement fibers 5 of the net 4, although helically oriented, have a main orientation in the circumferential direction of the pipe. The auxiliary fibers 6 are mainly oriented in the longitudinal direction of the pipe. Thereby, the required stiffness and strength both and circumferential direction and in longitudinal direction of the pipe can be obtained. As is usual, the plastic strips 2, 8 are applied onto the mandrel while in a heated, softened state. Thereby, the plastic material of said plastic strips 2, 8 will penetrate into the apertures 11 of the net 4, in such a way that a solid and coherent pipe wall will be obtained as mentioned before.

As shown in figure 5, the turns 7 of a plastic layer may slightly overlap each other (see the section according to figure 5). Thereby, an interconnection of the turns of a single reinforcement layer is obtained. However, this layout introduces an unevenness in the reinforcement layer which is not always beneficial.

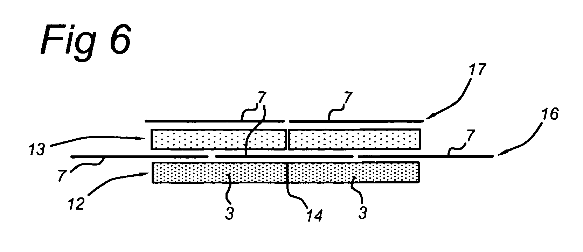

Figure 6 shows a further embodiment, according to which the plastic layers 12, 13 have turns which cover each other without bridging each other. However, the turns 7 of the net reinforcement 4 of one of the reinforcement layers 16 do bridge the turns of the other reinforcement layer 17, in such a way that the one of the plastic layer 13 is interposed between the reinforcement layers 16, 17. Thereby as well, a strong and stiff interconnection of the turns 3, 9 of the plastic layers 12, 13 is obtained.

Although two plastic layers and a single reinforcement layer are shown in the embodiment described before, it will be clear that further plastic layers and reinforcement layers can de added. Also, different types of materials may be used for the different layers.

### List of reference numerals

- 1.: Mandrel
- 2.: Plastic strip
- 3.: Turn plastic strip 2
- 4.: Reinforcement net
- 5.: Main fiber of reinforcement net
- 6.: Auxiliary fiber of reinforcement net
- 7.: Turn of reinforcement net
- 8.: Plastic strip
- 9.: Turn of plastic strip 8
- 10.: Pipe wall
- 11.: Aperture
- 12.: Plastic layer
- 13.: Plastic layer
- 14.: Weld
- 15.: Pitch angle
- 16.: Reinforcement layer
- 17.: Reinforcement layer

## Claims

1. Method for manufacturing a wound plastic pipe, comprising the steps of:
- providing a core (1),
- providing a first and at least a first and at least one second elongate reinforcement means (4) comprising main reinforcement fibers (5) which extend in the longitudinal direction of the elongate reinforcement means (4) and auxiliary fibers (6) which extend transversely with respect to the main fibers (5),
- helically winding the first reinforcement means (4) onto said core (1) according to adjoining turns (7),
- helically winding the at least one second reinforcement means (4) according to adjoining turns (7) with the same pitch and the same winding direction as the first reinforcement means (4),
- making the turns of the first reinforcement means bridge the turns of the at least one second reinforcement means,
- helically winding a plastic strip (8) according to abutting turns.

2. Method according to claim 1, comprising the step of:
- arranging adjoining turns of the reinforcement means according to a non-overlapping relationship.

3. Method according to claim 1 or 2, comprising the step of:
- making the adjoining turns of the reinforcement means abut each other.

4. Method according to any of claims 1-3, comprising the step :
- providing a plastic pipe core.

5. Method according to any of claims 1-3, comprising the step of:
- providing a mandrel core.

6. Method according to claims 5, comprising the step of:
- helically winding a plastic strip (2) onto the mandrel according to adjoining turns which abut one another.

7. Method according to claim 6, comprising the step of:
- making the turns of the reinforcement means (4) bridge the adjoining turns (3) of said plastic strip (2)

8. Method according to any of the preceding claims, comprising the step of:
- winding the reinforcement means (4) and at least one plastic strip (2) according to the same pitch, the pitch angle preferably being at most 20 degrees.

9. Method according to any of the preceding claims, comprising the step of:
- helically winding the reinforcement means (4) having a width which is smaller than the pipe diameter.

10. Method according to any of the preceding claims, comprising the step of:
- helically winding the first reinforcement means directly onto the at least one second reinforcement means, such that the turns of the at least one second reinforcement means bridge the adjoining turns of said first reinforcement means.

11. Method according to any of the preceding claims, comprising the step of:
- providing a helically wound plastic strip between two helically wound reinforcement means.

12. Method according to any of the preceding claims, comprising the step of:
- providing the reinforcement means (4) as a web like or net like structure.

13. Wound plastic pipe manufactured according to a method of any of claims 1-12, comprising a core (2), a helically wound first reinforcement means (4) comprising reinforcement fibers (5, 6) and extending around said core (2), a helically wound at least one second reinforcement means extending around the core (2) and the first reinforcement means (4), the turns of the at least one second reinforcement means bridging the turns of the first reinforcement means and with the same pitch and the same winding direction as the first reinforcement means; wherein the first and at least one second reinforcement means (4) comprises helically extending main reinforcement fibers (5) and auxiliary fibers (6) which are oriented transversely with respect to the main reinforcement fibers (5).

## Patentansprüche

1. Verfahren zum Herstellen eines gewundenen Kunststoffrohres, umfassend folgende Schritte:
- Bereitstellen eines Kerns (1)
- Bereitstellen einer ersten und wenigstens einer zweiten länglichen Versteifungseinrichtung (4), umfassend Hauptversteifungsfasern (5), die sich in der Längsrichtung der länglichen Versteifungseinrichtung (4) erstrecken, und Zusatzfasern (6), die sich quer im Bezug auf die Hauptfasern (5) erstrecken,
- spiralförmiges Winden der ersten Versteifungseinrichtung (4) auf den Kern (1) gemäß aneinander grenzenden Windungen (7),
- spiralförmiges Winden der wenigstens einen zweiten Versteifungseinrichtung (4) gemäß aneinander grenzenden Windungen (7) mit demselben Teilungsabstand und derselben Windungsrichtung wie die erste Versteifungseinrichtung (4),
- Gestalten der Windungen der ersten Versteifungseinrichtung derart, dass sie die Windungen der wenigstens einen zweiten Versteifungseinrichtung überbrücken, und
- spiralförmiges Winden eines Kunststoffstreifens (8) gemäß in Anlage befindlichen Windungen.

2. Verfahren nach Anspruch 1, umfassend folgenden Schritt:
- Anordnen aneinander grenzender Windungen der Versteifungseinrichtung gemäß einer nicht überlappenden Beziehung.

3. Verfahren nach Anspruch 1 oder 2, umfassend folgenden Schritt:
- Gestalten der aneinander grenzenden Windungen derart, dass sie zueinander in Anlage sind.

4. Verfahren nach einem der Ansprüche 1 bis 3, umfassend folgenden Schritt:
- Bereitstellen eines Kunststoffrohrkerns.

5. Verfahren nach einem der Ansprüche 1 bis 3, umfassend folgenden Schritt:
- Bereitstellen eines Dornkerns.

6. Verfahren nach Anspruch 5, umfassend folgenden Schritt:
- spiralförmiges Winden eines Kunststoffstreifens (2) auf den Dorn gemäß aneinander grenzenden Windungen, die miteinander in Anlage sind.

7. Verfahren nach Anspruch 6, umfassend folgenden Schritt:
- Gestalten der Windungen der Versteifungseinrichtung (4) derart, dass sie die angrenzenden Windungen (3) des Kunststoffstreifens (2) überbrücken.

8. Verfahren nach einem der vorhergehenden Ansprüche, umfassend folgenden Schritt:
- Winden der Versteifungseinrichtung (4) und des wenigstens einen Kunststoffstreifens (2) gemäß demselben Teilungsabstand, wobei der Teilungsabstandswinkel vorzugsweise höchstens 20 Grad beträgt.

9. Verfahren nach einem der vorhergehenden Ansprüche, umfassend folgenden Schritt:
- spiralförmiges Winden der Versteifungseinrichtung (4), die eine Breite hat, die geringer ist als der Rohrdurchmesser.

10. Verfahren nach einem der vorhergehenden Ansprüche, umfassend folgenden Schritt:
- spiralförmiges Winden der ersten Versteifungseinrichtung direkt auf die wenigstens eine zweite Versteifungseinrichtung, so dass die Windungen der wenigstens einen zweiten Versteifungseinrichtung die angrenzenden Windungen der ersten Versteifungseinrichtung überbrücken.

11. Verfahren nach einem der vorhergehenden Ansprüche, umfassend folgenden Schritt:
- Bereitstellen eines spiralförmig gewundenen Kunststoffstreifens zwischen zwei spiralförmig gewundenen Versteifungseinrichtungen.

12. Verfahren nach einem der vorhergehenden Ansprüche, umfassend folgenden Schritt:
- Bereitstellen der Versteifungseinrichtung (4) als gewebe- oder netzartige Struktur.

13. Gewundenes Kunststoffrohr, das gemäß einem Verfahren nach einem der Ansprüche 1 bis 12 hergestellt ist, umfassend einen Kern (2), eine spiralförmig gewundene erste Versteifungseinrichtung (4), die Versteifungsfasern (5, 6) umfasst und sich um den Kern (2) erstreckt, wenigstens eine zweite spiralförmig gewundene Versteifungseinrichtung, die sich um den Kern (2) und die erste Versteifungseinrichtung (4) erstreckt, wobei die Windungen der wenigstens einen zweiten Versteifungseinrichtung die Windungen der ersten Versteifungseinrichtung überbrücken und denselben Teilungsabstand und dieselbe Windungsrichtung wie die erste Versteifungseinrichtung haben, wobei die erste und die wenigstens eine zweite Versteifungseinrichtung (4) sich spiralförmig erstreckende Hauptversteifungsfasern (5) und Zusatzfasern (6) umfassen, die in Bezug auf die Hauptversteifungsfasern (5) quer angeordnet sind.

## Revendications

1. Procédé pour fabriquer un tuyau en matière plastique enroulé, comprenant les étapes consistant à :
- disposer un coeur(1),
- disposer un premier et au moins un deuxième moyen de renfort allongé (4) comprenant des fibres de renfort principales (5) qui s'étendent dans la direction longitudinale des moyens de renfort allongés (4) et des fibres auxiliaires (6) qui s'étendent transversalement par rapport aux fibres principales (5),
- enrouler de façon hélicoïdale le premier moyen de renfort (4) sur ledit coeur (1) selon des spires jointives (7),
- enrouler de façon hélicoïdale le deuxième moyen de renfort au nombre d'au moins un (4) selon des spires jointives (7) avec le même pas et la même direction d'enroulement que ceux du premier moyen de renfort (4),
- faire chevaucher par les spires du premier moyen de renfort les spires du deuxième moyen de renfort au nombre d'au moins un,
- enrouler de façon hélicoïdale une bande de matière plastique (8) selon des spires en butée.

2. Procédé selon la revendication 1, comprenant l'étape consistant à :
- disposer des spires jointives des moyens de renfort selon une relation de non-chevauchement.

3. Procédé selon la revendication 1 ou 2, comprenant l'étape consistant à :
- faire venir en butée les spires jointives des moyens de renfort les unes contre les autres.

4. Procédé selon l'une quelconque des revendications 1 à 3, comprenant l'étape consistant à :
- disposer un coeur de tuyau en matière plastique.

5. Procédé selon l'une quelconque des revendications 1 à 3, comprenant l'étape consistant à :
- disposer un coeur de mandrin.

6. Procédé selon la revendication 5, comprenant l'étape consistant à :
- enrouler de façon hélicoïdale une bande de matière plastique (2) sur le mandrin selon des spires jointives qui butent les unes contre les autres.

7. Procédé selon la revendication 6, comprenant l'étape consistant à :
- faire chevaucher par les spires des moyens de renfort (4) les spires jointives (3) de ladite bande de matière plastique (2).

8. Procédé selon l'une quelconque des revendications précédentes, comprenant l'étape consistant à :
- enrouler les moyens de renfort (4) et au moins une bande de matière plastique (2) selon le même pas, l'angle de pas étant de préférence de 20 degrés au plus.

9. Procédé selon l'une quelconque des revendications précédentes, comprenant l'étape consistant à :
- enrouler de façon hélicoïdale les moyens de renfort (4) ayant une largeur qui est inférieure au diamètre du tuyau.

10. Procédé selon l'une quelconque des revendications précédentes, comprenant l'étape consistant à :
- enrouler de façon hélicoïdale le premier moyen de renfort directement sur le deuxième moyen de renfort au nombre d'au moins un, de telle sorte que les spires du deuxième moyen de renfort au nombre d'au moins un chevauchent les spires jointives dudit premier moyen de renfort.

11. Procédé selon l'une quelconque des revendications précédentes, comprenant l'étape consistant à :
- disposer une bande de matière plastique enroulée de façon hélicoïdale entre deux moyens de renfort enroulés de façon hélicoïdale.

12. Procédé selon l'une quelconque des revendications précédentes, comprenant l'étape consistant à :
- disposer les moyens de renfort (4) sous la forme d'une structure en forme de toile ou en forme de filet.

13. Tuyau en matière plastique enroulé fabriqué selon un procédé selon l'une quelconque des revendications 1 à 12, comprenant un coeur (2), un premier moyen de renfort enroulés de façon hélicoïdale (4) comprenant des fibres de renfort (5, 6) et s'étendant autour dudit coeur (2), au moins un deuxième moyen de renfort enroulé de façon hélicoïdale s'étendant autour du coeur (2) et du premier moyens de renfort (4), les spires du deuxième moyen de renfort au nombre d'au moins un chevauchant les spires du premier moyen de renfort et ayant le même pas et la même direction d'enroulement que ceux du premier moyen de renfort, les premier et deuxième moyen de renfort au nombre d'au moins un (4) comprenant des fibres de renfort principales s'étendant de façon hélicoïdale (5) et des fibres auxiliaires (6) qui sont orientées transversalement par rapport aux fibres de renfort principales (5).
